# EUROPEAN PATENT APPLICATION

(11) **EP 2 592 307 A2**
(43) Date of publication of application: **15.05.2013**
(21) Application number: 12191175.4
(22) Date of filing: 03.11.2012
(51) Int. Cl.: F16H 63/30

(54) **Electric actuator**

(30) Priority: 08.11.2011 JP 2011244479
(71) Applicant: JTEKT CORPORATION, Osaka-shi Osaka 542-8502 (JP)
(72) Inventor: Uemoto, Takafumi, Osaka-shi,, Osaka 542-8502 (JP)
(74) Representative: Winter, Brandl, Fürniss, Hübner, Röss, Kaiser, Polte - Partnerschaft

(57) **Abstract**

A first guide groove that is an oblong groove along an axial direction of a shift select shaft is formed in a bottom face of a nut. A distal end portion of an arm is fitted in the first guide groove so as to be movable in the longitudinal direction of the first guide groove, and the distal end portion of the arm is engaged with longitudinal inner walls that define the first guide groove. A base end portion of the arm is fixed to an outer periphery of the shift select shaft. A cylindrical fitting protrusion is formed to protrude from one face of the nut. The fitting protrusion is fitted in a second guide groove that is an oblong groove along an axial direction of a screw shaft and that is formed in an inner wall surface of a housing.

## Description

### BACKGROUND OF THE INVENTION

### 1. Field of the Invention

The invention relates to an electric actuator that rotates a shift select shaft about its axis to perform a shift operation and that axially moves the shift select shaft to perform a select operation.

### 2. Description of Related Art

There is a conventional gear-shifting apparatus of an automated manual transmission that is a manual transmission in which gearshift is performed without depressing a clutch pedal. The above-described gear-shifting apparatus includes an electric actuator that shifts the gear of a shift mechanism through an operation of a shift lever. For example, Japanese Patent Application Publication No. 2011-75097 (JP 2011-75097 A) describes a shift/select actuating device as an example of the electric actuator. The shift/select actuating device rotates a shift select shaft about its axis by rotational driving force of an electric motor to perform a shift operation, or moves the shift select shaft in its axial direction by the rotational driving force of the electric motor. The shift/select actuating device includes a first conversion mechanism and a second conversion mechanism. The first conversion mechanism converts the rotational driving force of the electric motor into force for rotating the shift select shaft. The second conversion mechanism converts the rotational driving force into force for axially moving the shift select shaft.

In JP 2011-75097 A, in order to amplify and output the rotational driving force of the electric motor, the first conversion mechanism (shift conversion mechanism) includes a ball screw mechanism, which is one of speed reduction mechanisms, and an arm. For example, the ball screw mechanism includes a screw shaft and a nut. The screw shaft is arranged so as to be neither parallel to nor intersecting with the shift select shaft such that the screw shaft and the shift select shaft form an angle of 90 degrees when viewed from above. The nut is engaged with the screw shaft via balls. Specifically, the driving force of the electric motor is input into the screw shaft, one end of the arm is connected to the nut so as to be rotatable together with the nut, and the other end of the arm is coupled to the shift select shaft so as to be rotatable integrally with the shift select shaft. Specifically, the other end of the arm is coupled to the shift select shaft through spline-fitting. Then, the nut moves in the axial direction of the screw shaft by the rotation of the electric motor, and the arm pivots about the shift select shaft in accordance with the movement of the nut. In this way, the shift select shaft is rotated.

However, with the above configuration, there is an inconvenience that it is difficult to smoothly move the shift select shaft in the axial direction. For example, if the dimensional accuracy between the arm and the shift select shaft is low, a meshing clearance formed between a pair of spline portions partially becomes narrow. As a result, the other end of the arm may move in the axial direction of the shift select shaft in accordance with the axial movement of the shift select shaft. If the other end of the arm axially moves, the arm, which has been perpendicular to the shift select shaft, is tilted and no longer perpendicular to the shift select shaft. Thus, the meshing clearance formed between the spline portions becomes further narrower. As a result, the outer periphery of the shift select shaft that axially moves may scrape out the inner periphery of the spline portion of the other end of the arm.

If the other end of the arm is fixed to the shift select shaft, such an inconvenience is avoided. However, in the above-described configuration in which one end of the arm is connected to the nut to perform a shift operation, it is not possible to fix the other end of the arm to the shift select shaft that is movable in the axial direction. Thus, if the other end of the arm is fixed to the shift select shaft, a configuration for smoothly rotating the shift select shaft needs to be employed.

### SUMMARY OF THE INVENTION

It is an object of the invention to provide an electric actuator that is able to cause a shift select shaft to smoothly perform a shift operation and a select operation.

An aspect of the invention relates to an electric actuator that rotates a shift select shaft about an axis of the shift select shaft to perform a shift operation, and that moves the shift select shaft in an axial direction of the shift select shaft to perform a select operation. The electric actuator includes: an electric motor that generates rotational driving force; and a shift conversion mechanism that converts the rotational driving force from the electric motor into force that rotates the shift select shaft about the axis. The shift conversion mechanism includes a ball screw mechanism and an arm. The ball screw mechanism has a screw shaft and a nut. The screw shaft is arranged so as to be neither parallel to nor intersecting with the shift select shaft such that the screw shaft and the shift select shaft form a predetermined angle when viewed from a direction that is perpendicular to both an axial direction of the screw shaft and the axial direction of the shift select shaft. The screw shaft rotates upon receiving the rotational driving force from the electric motor. The nut has a first guide groove that extends along the axial direction of the shift select shaft, and is fitted to the screw shaft. The arm has one end accommodated in the first guide groove so as to be movable in the longitudinal direction of the first guide groove, the one end being engaged with longitudinal inner walls of the first guide groove, and the other end fixed to an outer periphery of the shift select shaft. The arm pivots about the shift select shaft in accordance with movement of the nut in the axial direction of the screw shaft to rotate the shift select shaft. The electric actuator further includes rotation prevention means for preventing rotation of the nut around the screw shaft, at a plurality of positions in the axial direction of the screw shaft.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic exploded perspective view of the configuration of part of a transmission apparatus to which an electric actuator according to an embodiment of the invention is applied;
FIG. 2 is a perspective view that shows the configuration of the electric actuator shown in FIG. 1;
FIG. 3 is a sectional view that shows the configuration of the electric actuator shown in FIG. 1;
FIG. 4 is a sectional view taken along the line IV-IV in FIG. 3;
FIG. 5 is a bottom view when viewed from the direction indicated by an arrow V in FIG. 3;
FIG. 6 is a view that shows the state where a fitting protrusion is fitted in a second guide groove;
FIG. 7A to FIG. 7C are views that show changes in the state of a shift conversion mechanism during a shift operation; and
FIG. 8A to FIG. 8C are views that show changes in the state of the shift conversion mechanism during a select operation.

### DETAILED DESCRIPTION OF EMBODIMENTS

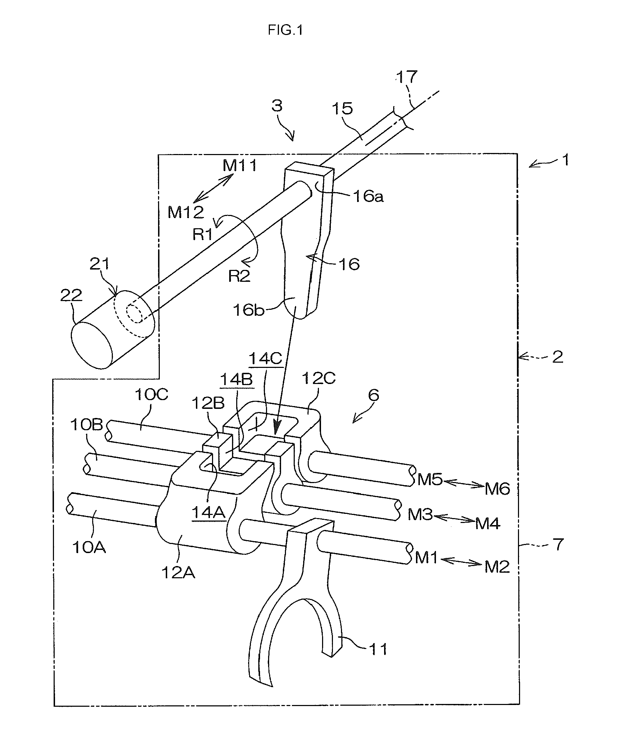

Hereinafter, an embodiment of the invention will be described in detail with reference to the accompanying drawings. FIG. 1 is a schematic exploded perspective view of the configuration of part of a gear-shifting apparatus 1 to which a transmission actuating device 3 according to the embodiment of the invention is applied. The gear-shifting apparatus 1 includes a transmission 2 and the transmission actuating device 3 that actuates the transmission 2 to shift gears. The transmission 2 includes a power transmission device (not shown), a shift operation mechanism 6 and a gear housing 7. The power transmission device is formed of a known constant-mesh parallel-shaft gear power transmission device. The shift operation mechanism 6 changes the power transmission path of the power transmission device among a plurality of power transmission paths. The gear housing 7 accommodates the power transmission device and the shift operation mechanism 6. The gear-shifting apparatus 1 that includes the transmission 2 is mounted in a vehicle, such as a passenger automobile or a truck. By changing the power transmission path in the power transmission device, it is possible to change the power transmission ratio.

The shift operation mechanism 6 is accommodated in the gear housing 7, and includes a plurality of fork shafts 10A, 10B, 10C that extend parallel to each other. The fork shaft 10A is provided so as to be movable in axial directions M1, M2. The fork shaft 10B is provided so as to be movable in axial directions M3, M4. The fork shaft 10C is provided so as to be movable in axial directions M5, M6. The axial directions M1, M3, M5 are oriented in the same direction and are parallel to each other. The axial directions M2, M4, M6 are oriented in a direction opposite to the axial directions M1, M3, M5.

The fork shafts 10A, 10B, 10C are arranged parallel to each other so as to be aligned on a straight line when viewed from the axial directions M1, M3, M5 (M2, M4, M6). Fork heads 12A, 12B, 12C are fixed to middle portions of the fork shafts 10A, 10B, 10C, respectively. The fork heads 12A, 12B, 12C are actuated by the transmission actuating device 3. The fork heads 12A, 12B, 12C are located at the same position in the axial directions M1, M3, M5. Each of the fork heads 12A, 12B, 12C has a facing surface that faces the transmission actuating device 3. The facing surface of the fork heads 12A, 12B, 12C are flush with each other. Engagement recesses 14A, 14B, 14C are formed in the respective facing surfaces. A distal end portion 16b of the internal lever 16 is able to move between engagement positions, at which the distal end portion 16b is engaged with the respective fork heads 12A, 12B, 12C, through an internal space of the engagement recesses 14A, 14B, 14C.

In addition, a shift fork 11 is fixed to each of the fork shafts 10A, 10B, 10C. Each shift fork 11 is engaged with a corresponding operated member that is operated to change the power transmission path of the power transmission device. The operated members (not shown) include, for example, a clutch sleeve and a synchronizer mechanism. In FIG. 1, only the shift fork 11 provided on the fork shaft 10A is shown. Through movement of each shift fork 11 in a corresponding one of the axial directions M1 to M6, the shift fork 11 is engaged with the corresponding operated member to actuate the operated member. Note that FIG. 1 shows engagement grooves as the engagement recesses 14A, 14B, 14C. However, engagement holes may be, of course, employed instead of the engagement grooves.

The transmission actuating device 3 includes the columnar shift select shaft 15 and an electric actuator 21. The shift select shaft 15 causes the shift operation mechanism 6 to perform a shift operation and a select operation. The electric actuator 21 is used as a rotary driving source for causing the shift select shaft 15 to perform a shift operation and a select operation. The shift select shaft 15 has a central axis 17. The shift select shaft 15 is supported by the gear housing 7 so as to be rotatable about the axis (that is, the central axis 17) of the shift select shaft 15 in a first rotation direction R1 or a second rotation direction R2 and movable in the first axial direction M11 or the second axial direction M12. The shift select shaft 15 is arranged so as to be neither parallel to nor intersecting with each of the fork shafts 10A, 10B, 10C, and the shift select shaft 15 and each of the fork shafts 10A, 10B, 10C form an angle of 90 degrees when viewed from above. The second rotation direction R2 is a rotation direction opposite to the first rotation direction R1. The second axial direction M12 is an axial direction opposite to the first axial direction M11.

A base end portion 16a of the internal lever 16 accommodated in the gear housing 7 is fixed to a middle portion of the shift select shaft 15. The internal lever 16 rotates together with the shift select shaft 15 about the central axis 17 of the shift select shaft 15. The distal end portion (left end portion in FIG. 1) of the shift select shaft 15 protrudes outward from the gear housing 7. When the shift select shaft 15 is moved in the first axial direction M11 by the electric actuator 21, the internal lever 16 is moved in the first axial direction M11. On the other hand, when the shift select shaft 15 is moved in the second axial direction M12 by the electric actuator 21, the internal lever 16 is moved in the second axial direction M12. The distal end portion 16b of the internal lever 16 is engaged with a selected one of the fork heads 12A, 12B, 12C, at the corresponding select direction position. In this way, a select operation is completed.

When the shift select shaft 15 is rotated in the first rotation direction R1 by the electric actuator 21, the internal lever 16 is pivoted in the first rotation direction R1 about the shift select shaft 15. On the other hand, when the shift select shaft 15 is rotated in the second rotation direction R2 by the electric actuator 21, the internal lever 16 is pivoted in the second rotation direction R2 about the shift select shaft 15. As a result, one of the fork heads 12A, 12B, 12C, which has been engaged with the internal lever 16, moves in one of the axial directions M1 to M6 of a corresponding one of the fork shafts 10A, 10B, 10C. In this way, a shift operation is completed.

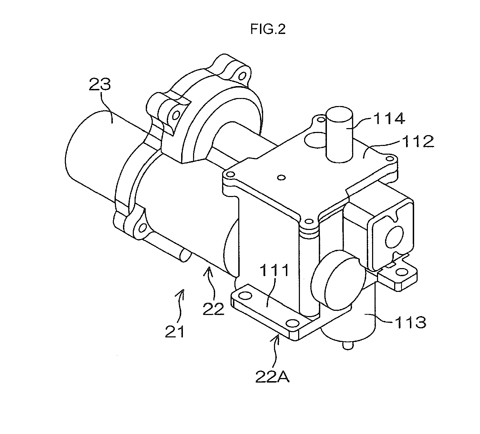

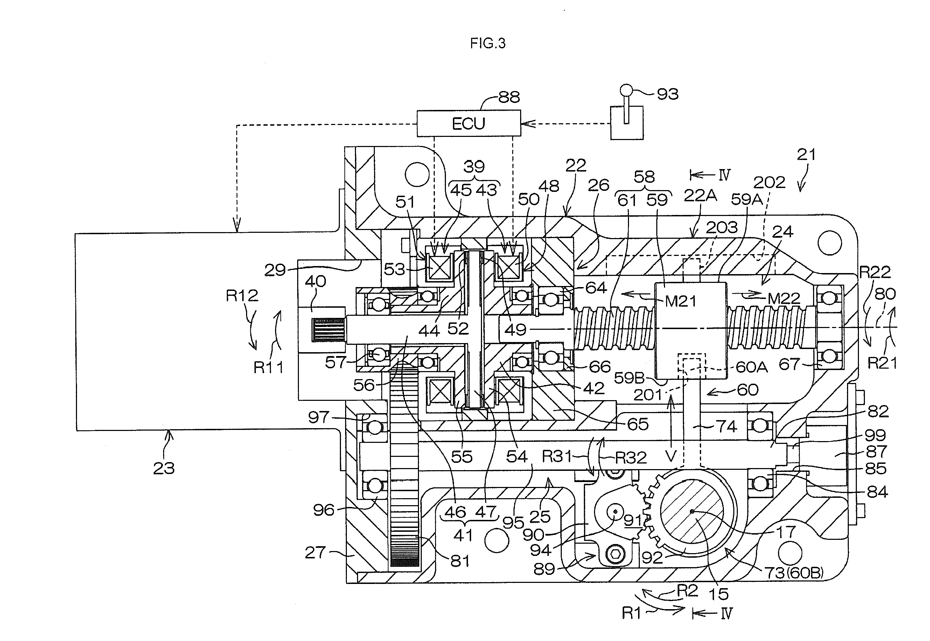

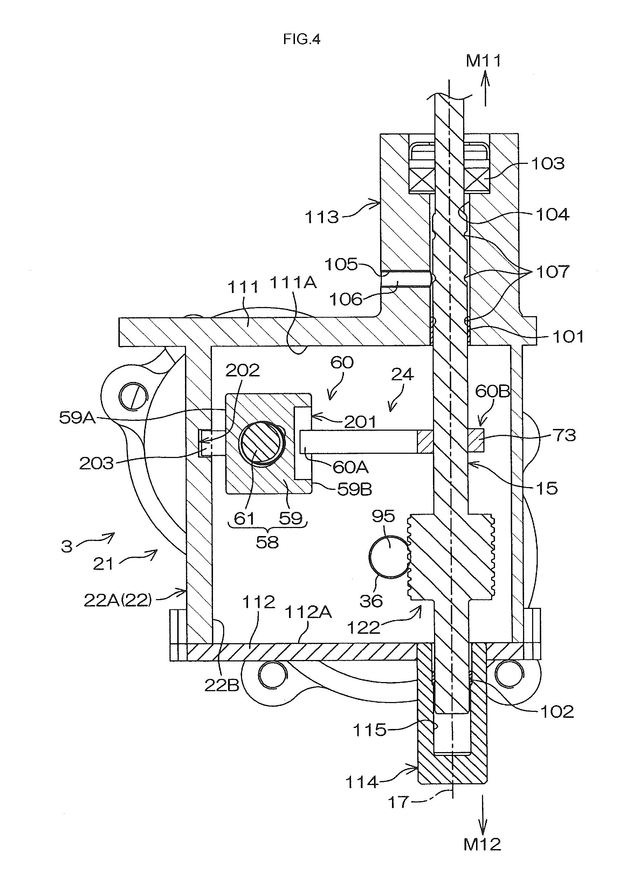

FIG. 2 is a perspective view that shows the configuration of the electric actuator 21. FIG. 3 is a sectional view that shows the configuration of the electric actuator 21. FIG. 4 is a sectional view taken along the line IV-IV in FIG. 3. Note that, in FIG. 2, the shift select shaft 15 is not shown. Hereinafter, the configuration of the electric actuator 21 will be described with reference to FIG. 2 to FIG. 4. The electric actuator 21 includes a closed-end substantially cylindrical housing 22. The electric actuator 21 is fixed to the outer surface of the gear housing 7 (see FIG. 1) or a predetermined portion of the vehicle.

The electric actuator 21 includes an electric motor 23, a shift conversion mechanism 24, a select conversion mechanism 25, and a switching unit 26. The electric motor 23 is, for example, a brushless electric motor. The shift conversion mechanism 24 converts rotary torque (rotational driving force), generated by the electric motor 23, into force that rotates the shift select shaft 15 about its axis. The select conversion mechanism 25 converts rotary torque, generated by the electric motor 23, into force that moves the shift select shaft 15 in the first axial direction M11 or the second axial direction M12. The switching unit 26 allows or interrupts transmission of rotary torque, generated by the electric motor 23, to the shift conversion mechanism 24 and the select conversion mechanism 25. The shift conversion mechanism 24, the select conversion mechanism 25 and the switching unit 26 are accommodated in the housing 22.

An opening portion (left side shown in FIG. 3) of the housing 22 is closed by a substantially plate-like lid 27. The housing 22 and the lid 27 each are made of a metal material, such as casting iron and aluminum. The outer periphery of the lid 27 is fitted to the opening portion of the housing 22. A circular through-hole 29 is formed in the lid 27. The through-hole 29 extends from the inner surface (right surface shown in FIG. 3) to the outer surface (left surface shown in FIG. 3). In addition, a body casing of the electric motor 23 is fixed to the outer surface of the lid 27. The electric motor 23 is rotatable in a forward direction and a reverse direction, that is, the rotation direction R11 and the rotation direction R12. For example, a brushless electric motor is employed as the electric motor 23. The first rotation direction R11 is a clockwise direction, when viewed from the motor output shaft side, and is referred to as "CW". The second rotation direction R12 is a counterclockwise direction, when viewed from the motor output shaft, and is referred to as "CCW". The body casing of the electric motor 23 is attached so as to be exposed on the outside of the housing 22. An output shaft 40 of the electric motor 23 is arranged so as to be neither parallel to nor intersecting with the shift select shaft 15 such that, when viewed from above, the output shaft 40 and the shift select shaft 15 form an angle of 90 degrees. The output shaft 40 extends in a predetermined direction (lateral direction shown in FIG. 3) perpendicular to the first and second axial directions M11, M12 (see FIG. 4). The output shaft 40 faces the inside the housing 22 via the through-hole 29 of the lid 27, and faces the switching unit 26.

As shown in FIG. 4, the housing 22 includes a distal end-side portion (lower end-side portion shown in FIG. 4) of the shift select shaft 15 and a substantially box-shaped main housing 22A. The main housing 22A mainly accommodates components of the shift conversion mechanism 24. The main housing 22A includes a first side wall 111 (see FIG. 4), a second side wall 112 (see FIG. 4), a first shaft holder 113 (see FIG. 4), and a second shaft holder 114 (see FIG. 4). The first shaft holder 113 supports a base end-side portion of the shift select shaft 15. The second shaft holder 114 accommodates and supports the distal end portion of the shift select shaft 15.

The inner side surface of the first side wall 111 is a first inner wall surface 111A (see FIG. 4) formed of a flat surface. The inner side surface of the second side wall 112 is a second inner wall surface 112A (see FIG. 4) formed of a flat surface. The second inner wall surface 112A faces the first inner wall surface 111A, and is parallel to the first inner wall surface 111A. The first shaft holder 113 is formed so as to protrude outward from the outer wall surface (surface on the opposite side of the first side wall 111 from the first inner wall surface 111A) of the first side wall 111, and is formed in, for example, a cylindrical shape. The first shaft holder 113 is integrally formed with the first side wall 111. An insertion hole 104 having a circular cross section is formed in the first shaft holder 113 and the first side wall 111. The insertion hole 104 extends through the first shaft holder 113 and the first side wall 111 in their thickness direction (up-down direction in FIG. 4). The shift select shaft 15 is passed through the insertion hole 104.

A first plain bearing 101 (see FIG. 4) is fixedly fitted onto the inner peripheral wall of the insertion hole 104. The first plain bearing 101 surrounds the outer periphery of a middle portion of the shift select shaft 15 (a portion slightly closer to the based end than the distal end portion) that is passed through the insertion hole 104, and supports the outer periphery of the middle portion of the shift select shaft 15 so as to be in sliding contact with the outer periphery of the middle portion. The second shaft holder 114 is formed so as to protrude outward from the outer wall surface (surface on the opposite side of the second side wall 112 from the second inner wall surface 12A) of the second side wall 112, and is formed in, for example, a substantially cylindrical shape. The second shaft holder 114 is integrally formed with the second side wall 112. A columnar distal end portion accommodating groove 115 (see FIG. 4) is defined by the inner periphery and the bottom face of the second shaft holder 114. The distal end portion accommodating groove 115 accommodates the distal end portion (lower end portion in FIG. 4) of the shift select shaft 15. The inner peripheral wall of the distal end portion accommodating groove 115 is formed in a cylindrical shape having a central axis coaxial with the cylindrical insertion hole 104.

A second plain bearing 102 (see FIG. 4) is fixedly fitted onto the inner peripheral wall of the distal end portion accommodating groove 115. The second plain bearing 102 surrounds the outer periphery of the distal end portion of the shift select shaft 15 accommodated in the distal end portion accommodating groove 115, and supports the outer periphery of the distal end portion so as to be in sliding contact with the outer periphery of the distal end portion. The shift select shaft 15 is supported by the first plain bearing 101 and the second plain bearing 102 so as to be rotatable around its central axis 17 and movable in the first and second axial directions M11, M12.

A seal member 103 is provided at a portion on the outer side of the first plain bearing 101 in the insertion hole 104 to seal the clearance between the inner peripheral wall of the insertion hole 104 and the outer periphery of the shift select shaft 15 so that dust or dirt does not enter the housing 22 (main housing 22A). A lock pole 106 is arranged in the first shaft holder 113, at a position between the seal member 103 and the first plain bearing 101 in the thickness direction (up-down direction in FIG. 4). Specifically, the lock pole 106 is accommodated in a through-hole 105 that extends from the inner peripheral wall of the insertion hole 104 to the outer periphery of the first shaft holder 113. The lock pole 106 extends in a direction perpendicular to the central axis of the columnar distal end portion accommodating groove 115 (that is, the central axis 17 of the shift select shaft 15) (perpendicular direction), has a substantially cylindrical shape, and is provided so as to be movable along the above-described direction (perpendicular direction). The distal end portion of the lock pole 106 has a semi-spherical shape, and is engaged with one of engaging grooves 107 described below.

A plurality of (for example, three) engaging grooves 107 is formed on the outer periphery of the shift select shaft 15 at intervals in the first and second axial directions M11, M12 so as to extend in the circumferential direction of the shift select shaft 15. Each engaging groove 107 is formed all around the shift select shaft 15. As the lock pole 106 moves in its longitudinal direction, the distal end portion protrudes toward the central axis 17 (rightward in FIG. 4) beyond the inner peripheral wall of the insertion hole 104 to be engaged with one of the engaging grooves 107. In this way, the lock pole 106 prohibits movement of the shift select shaft 15 in the first and second axial directions M11, M12. As a result, the shift select shaft 15 is held with a constant force with the movement in the first and second axial directions M11, M12 prohibited.

In a portion of the outer periphery of the shift select shaft 15 between a portion which is in sliding contact with the first plain bearing 101 and a portion which is in sliding contact with the second plain bearing 102, external splines 121 (see FIG. 4) and a rack 122 (described later) (see FIG. 4) are formed in this order from the first plain bearing 101 side. A pinion 36 is in mesh with the rack 122. As shown in FIG. 3, the switching unit 26 includes a transmission shaft 41, a first rotor 42, a second rotor 44 and a clutch mechanism 39. The transmission shaft 41 is coaxially coupled to the output shaft 40 of the electric motor 23. The first rotor 42 is provided coaxially with the transmission shaft 41 so as to be rotatable together with the transmission shaft 41. The second rotor 44 is provided coaxially with the transmission shaft 41 so as to be rotatable together with the transmission shaft 41. The clutch mechanism 39 switches the element, to which the transmission shaft 41 is coupled, between the first rotor 42 and the second rotor 44.

The transmission shaft 41 includes a small-diameter main shaft portion 46 and a large-diameter portion 47. The main shaft portion 46 is provided on the electric motor 23 side. The large-diameter portion 47 is provided integrally with the main shaft portion 46, at an axial end portion (right end portion in FIG. 3), on the first rotor 42 side, of the main shaft portion 46, and is larger in diameter than the main shaft portion 46. The first rotor 42 is arranged on the opposite side of the transmission shaft 41 from the electric motor 23. The first rotor 42 has a first armature hub 54 that projects radially outward from the outer periphery of the axial end portion (left end portion in FIG. 3) on the electric motor 23 side. The first armature hub 54 is arranged so as to face the surface (right surface in FIG. 3) of the large-diameter portion 47, which is on the opposite side of the large diameter portion 47 from the electric motor 23.

The second rotor 44 is arranged on the opposite side of the large-diameter portion 47 of the transmission shaft 41 from the first rotor 42, that is, arranged on the electric motor 23 side. The second rotor 44 surrounds the main shaft portion 46 of the transmission shaft 41. The second rotor 44 has a second armature hub 55 that projects radially outward from the outer periphery of the axial end portion (right end portion in FIG. 3), which is on the opposite side of the second rotor 44 from the electric motor 23. The second armature hub 55 is arranged so as to face the surface (left surface in FIG. 3) of the large-diameter portion 47, which is on the electric motor 23 side. In other words, (the first armature hub 54 of) the first rotor 42 and (the second armature hub 55 of) the second rotor 44 are arranged so as to sandwich the large-diameter portion 47 of the transmission shaft 41 therebetween.

The clutch mechanism 39 includes a shift electromagnetic clutch 43 and a select electromagnetic clutch (second clutch) 45. The shift electromagnetic clutch 43 is connected to or disconnected from the first rotor 42 to couple or remove the transmission shaft 41 to or from the first rotor 42. The select electromagnetic clutch 45 is connected to or disconnected from the second rotor 44 to couple or remove the transmission shaft 41 to or from the second rotor 44. The shift electromagnetic clutch 43 includes a first field 48 and a first armature 49. The first armature 49 is arranged on the other axial side face (right surface in FIG. 3) of the large-diameter portion 47 of the transmission shaft 41 with a small clearance left between the first armature 49 and the surface, on the electric motor 23 side (left surface in FIG. 3), of the first armature hub 54, and is formed in a substantially annular plate shape. The first armature 49 is made of a ferromagnetic material, such as iron. The first field 48, in which a first electromagnetic coil 50 is incorporated in the yoke, is fixed to the housing 22.

The select electromagnetic clutch 45 includes a second field 51 and a second armature 52. The second armature 52 is arranged on one axial side face (left surface in FIG. 3) of the large-diameter portion 47 of the transmission shaft 41 with a small clearance left between the second armature 52 and the surface (right surface in FIG. 3) of the second armature hub 55, which is on the opposite side of the second armature hub 55 from the electric motor 23, and is formed in a substantially annular plate shape. The second armature 52 is made of a ferromagnetic material, such as iron. The second field 51, in which a second electromagnetic coil 53 is incorporated in the yoke, is fixed to the housing 22. The first field 48 and the second field 51 are arranged next to each other along the axial direction such that the large-diameter portion 47, the first armature hub 54 and the second armature hub 55 are interposed between the first field 48 and the second field 51.

A clutch driving circuit (not shown) used to drive the shift electromagnetic clutch 43 and the select electromagnetic clutch 45 is connected thereto. The clutch driving circuit is supplied with voltage (supplied with electric power) from a power supply (for example, 24 V, not shown) via, for example, wiring. The clutch driving circuit is configured to include a relay circuit, and the like. The clutch driving circuit is provided so as to be able to individually supply electric power or stop supply of electric power to the shift electromagnetic clutch 43 and the select electromagnetic clutch 45. Note that the configuration of the clutch driving circuit is not limited to the configuration for driving both the shift electromagnetic clutch 43 and the select electromagnetic clutch 45. Alternatively, a clutch driving circuit for driving the shift electromagnetic clutch 43 and a clutch driving circuit for driving the select electromagnetic clutch 45 may be separately provided.

As the first electromagnetic coil 50 is energized by supplying electric power to the shift electromagnetic clutch 43 via the clutch driving circuit, the first electromagnetic coil 50 is placed in an excited state. Thus, electromagnetic attraction force is generated in the first field 48 that includes the first electromagnetic coil 50. Then, the first armature 49 is attracted to the first field 48 to be deformed toward the first field 48 As a result, the first armature 49 frictionally contacts the first armature hub 54. Thus, as the first electromagnetic coil 50 is energized, the first electromagnetic coil 50 is connected (coupled) to the first rotor 42, and the transmission shaft 41 is coupled to the first rotor 42. Then, supply of voltage to the first electromagnetic coil 50 is stopped and current does not flow through the first electromagnetic coil 50. Thus, attraction force for attracting the first armature 49 is no longer generated, so the first armature 49 returns to an original shape. Thus, the first electromagnetic coil 50 separates from the first rotor 42, and the transmission shaft 41 is removed from the first rotor 42. That is, by switching the state of power supply to the first electromagnetic coil 50 between the power supply state and the power supply stopped state, it is possible to allow or interrupt transmission of rotary torque from the electric motor 23 to the first rotor 42.

On the other hand, as the second electromagnetic coil 53 is energized by supplying electric power to the select electromagnetic clutch 45 via the clutch driving circuit, the second electromagnetic coil 53 is placed in an excited state. Thus, electromagnetic attraction force is generated in the second field 51 that includes the second electromagnetic coil 53. Then, the second armature 52 is attracted to the second field 51 to be deformed toward the second field 51. As a result, the second armature 52 frictionally contacts the second armature hub 55. Thus, as the second electromagnetic coil 53 is energized, the second electromagnetic coil 53 is connected (coupled) to the second rotor 44, and the transmission shaft 41 is coupled to the second rotor 44. Then, supply of voltage to the second electromagnetic coil 53 is stopped and current does not flow through the second electromagnetic coil 53. Thus, attraction force for attracting the second armature 52 is no longer generated, and the second armature 52 returns to an original shape. Thus, the second electromagnetic coil 53 separates from the second rotor 44, and the transmission shaft 41 is removed from the second rotor 44. That is, by switching the state of power supply to the second electromagnetic coil 53 between the power supply state and the power supply stopped state, it is possible to allow or interrupt transmission of rotary torque from the electric motor 23 to the second rotor 44.

An annular small-diameter first gear 56 is fixedly fitted onto the outer periphery of the second rotor 44. The first gear 56 is provided coaxially with the second rotor 44. The first gear 56 is supported by a rolling bearing 57. An outer ring of the rolling bearing 57 is fixedly fitted onto the inner periphery of the first gear 56. An inner ring of the rolling bearing 57 is fixedly fitted onto the outer periphery of the main shaft portion 46 of the transmission shaft 41. The shift conversion mechanism 24 includes a ball screw mechanism 58 and an arm 60. The ball screw mechanism 58 is a speed reducer that converts a rotational motion into a linear motion. The arm 60 pivots about the central axis 17 of the shift select shaft 15 as a nut 59 of the ball screw mechanism 58 moves in the axial direction.

The ball screw mechanism 58 includes a screw shaft 61 and the nut 59. The screw shaft 61 extends coaxially with the first rotor 42 (that is, coaxially with the transmission shaft 41). The nut 59 is screwed to the screw shaft 61 via balls (not shown). The screw shaft 61 is arranged so as to be neither parallel to nor intersecting with the shift select shaft 15 such that, when viewed from above, the screw shaft 61 and the shift select shaft 15 form an angle of 90°. In other words, when viewed from a direction perpendicular to both the axial directions M21, M22 of the screw shaft 61 and the axial directions M11, M12 of the shift select shaft 15, the screw shaft 61 and the shift select shaft 15 are perpendicular to each other.

The screw shaft 61 is supported by rolling bearings 64, 67 while movement of the screw shaft 61 in the axial directions M21, M22 is restricted. Specifically, one end portion (left end portion in FIG. 3) of the screw shaft 61 is supported by the rolling bearing 64, and the other end portion (right end portion in FIG. 3) of the screw shaft 61 is supported by the rolling bearing 67. The screw shaft 61 is supported by the rolling bearings 64, 67 so as to be rotatable about its axis (central axis 80.

An inner ring of the rolling bearing 64 is fixedly fitted onto one end portion of the screw shaft 61. In addition, an outer ring of the rolling bearing 64 is fitted into a through-hole that passes through a bottom wall 65 of the casing of the switching unit 26 fixed to the housing 22, so as to extend from the inner surface to the outer surface of the bottom wall 65. In addition, a lock nut 66 is engaged with the outer ring of the rolling bearing 64 to restrict movement of the rolling bearing 64 in the axial direction M22 of the screw shaft 61. A part of one end portion of the screw shaft 61, which is on the electric motor 23 side (left side in FIG. 3) with respect to the rolling bearing 64, is passed through the inner periphery of the first rotor 42, and is coupled to the first rotor 42 so as to be rotatable together with the first rotor 42. The outer ring of the rolling bearing 67 is fixed to the inner periphery of the housing 22.

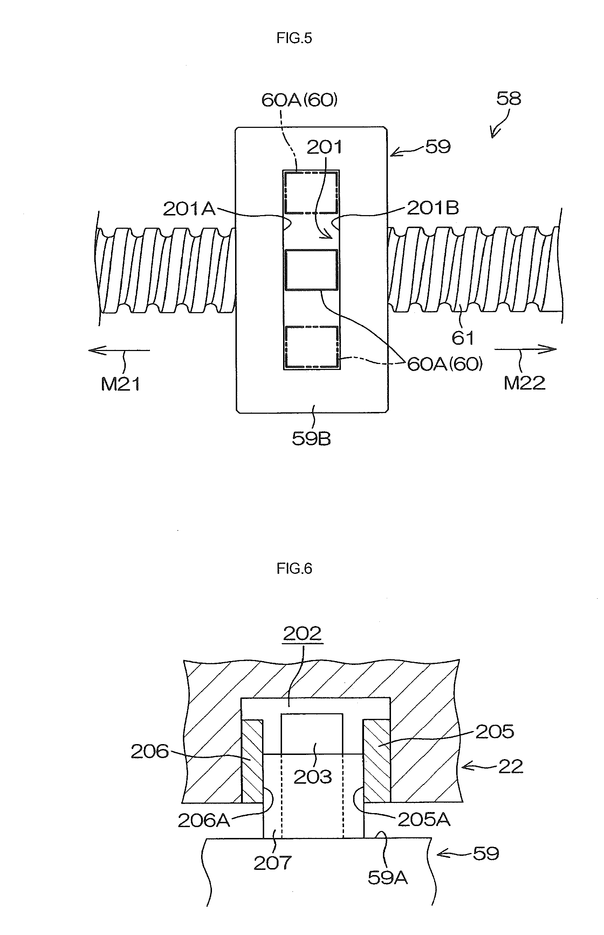

As shown in FIG. 3 and FIG. 4, the housing 22 (main housing 22A) has a housing inner wall surface (facing surface) 22B formed of a flat surface that faces the screw shaft 61. The inner wall surface 22B is in proximity to one face 59A (left-side face in FIG. 4) of the nut 59 fitted to the screw shaft 61. FIG. 5 is a bottom view when viewed from a direction indicated by an arrow V in FIG. 3.

As shown in FIG. 3 to FIG. 5, the nut 59 has a rectangular parallelepiped shape, and has a bottom face 59B having a rectangular shape that is long in a direction perpendicular to the axial directions M21, M22 of the screw shaft 61. A first guide groove 201 that is an oblong groove is formed in the bottom face 59B of the nut 59. The first guide groove 201 has a rectangular shape that is long in the longitudinal direction of the bottom face 59B. In other words, the first guide groove 201 is long in a direction perpendicular to the axial directions M21, M22 of the screw shaft 61 (that is, a direction along the axial directions M11, M12 of the shift select shaft 15 (see FIG. 4)). The first guide groove 201 has a rectangular shape in cross section. A distal end portion (one end) 60A of the arm 60 is fitted in (accommodated in) the first guide groove 201 so as to be movable in the longitudinal direction of the first guide groove 201. The distal end portion 60A of the arm 60 is engaged with longitudinal inner walls 201A, 201B that define the first guide groove 201.

As shown in FIG. 3 and FIG. 4, a columnar fitting protrusion 203 is formed at substantially the center portion of one face 59A (the face on the opposite side of the nut 59 from the bottom face 59B) of the nut 59. The one face 59A is located on the housing 22 side. The fitting protrusion 203 protrudes toward the inner wall surface 22B. The fitting protrusion 203 is fitted in a second guide groove 202 that is an oblong groove. FIG. 6 is a view that shows the state where the fitting protrusion 203 is fitted in the second guide groove 202.

As shown in FIG. 3, FIG. 4 and FIG. 6, the second guide groove 202 is formed in the housing inner wall surface 22B at a portion that faces the screw shaft 61. The second guide groove 202 extends along the screw shaft 61. In other words, the second guide groove 202 is long in the direction along the axial directions M21, M22 of the screw shaft 61. The second guide groove 202 has a rectangular shape in cross section. Plate-like plain bearings 205, 206 are fixedly arranged on respective longitudinal side walls of the second guide groove 202 such that the plate-like plain bearings 205, 206 extend along the side walls. A plate material that is formed by sintering a copper-tin alloy on a steel backing in a porous manner and then applying a mixed material of polytetrafluoroethylene (PTFE) and special additive onto both principal surfaces of the obtained product is employed as a material for each of the plate-like plain bearings 205, 206. Each of the plate-like plain bearings 205, 206 is fixed to a corresponding one of the side walls of the second guide groove 202 by an adhesive, or the like.

On the other hand, a cylindrical plain bearing 207 is fixedly fitted onto the outer periphery of the cylindrical fitting protrusion 203. The diameter of the cylindrical plain bearing 207 is set equal to or slightly smaller than a distance between (inner walls 205A, 206A of) the plate-like plain bearings 205, 206 arranged in the second guide groove 202. A cylindrical material that is formed by sintering a copper-tin alloy on a steel backing in a porous manner and then applying a mixed material of polytetrafluoroethylene (PTFE) and special additive onto both inner and outer peripheries of the obtained product is employed as a material for the cylindrical plain bearing 207. The cylindrical plain bearing 207 is fixed to the outer periphery of the fitting protrusion 203 by means of, for example, fitting or an adhesive.

When the fitting protrusion 203 is fitted in the second guide groove 202, the outer periphery of the cylindrical plain bearing 207 is in sliding contact with both the inner wall 205A of the plate-like plain bearing 205 and the inner wall 206A of the plate-like plain bearing 206. The arm 60 is a linear rod, and is formed in a rectangular shape in cross section over its entire length. A fixing engagement portion (annular portion) 73 (see FIG. 4) is provided at a base end portion (the other end) 60B of the arm 60. The fixing engagement portion 73 is used to fix the arm 60 to the shift select shaft 15. The fixing engagement portion 73 has, for example, an annular plate shape, but may have a cylindrical shape. The fixing engagement portion 73 is fitted onto the shift select shaft 15. The shift select shaft 15 is fixed to the fixing engagement portion 73 through press-fitting (fitting). The arm 60 is fixedly supported by the shift select shaft 15 such that the arm 60 is perpendicular to the shift select shaft 15. Therefore, in accordance with the rotation of the shift select shaft 15, the arm 60 pivots within a plane that is perpendicular to the shift select shaft 15.

The rotation of the nut 59 around the screw shaft 61 is prohibited by engagement between the outer periphery of the fitting protrusion 203 and the inner walls that define the second guide groove 202 (the inner walls 205A, 206A of the plain bearings 205, 206). Specifically, through engagement between the fitting protrusion 203 and the inner walls 205A, 206A of the second guide groove 202, the nut 59 is maintained in such a position that the one face 59A of the nut 59 is parallel to both the screw shaft 61 and the shift select shaft 15. Thus, in accordance with the rotation of the screw shaft 61, the nut 59 moves in the axial direction M21 or M22 of the screw shaft 61. In accordance with the axial movement of the nut 59, the distal end portion 60A of the arm 60 moves.

Therefore, as the screw shaft 61 rotates and, accordingly, the nut 59 moves in the axial direction M21 or M22 of the screw shaft 61, the arm 60 pivots about the shift select shaft 15. In accordance with the pivot motion of the arm 60, the shift select shaft 15 rotates. As shown in FIG. 3, the select conversion mechanism 25 includes the first gear 56, a pinion shaft 95, a second gear 81 and the small-diameter pinion 36. The pinion shaft 95 extends parallel to the transmission shaft 41, and is provided so as to be rotatable. The second gear 81 is coaxially fixed to the pinion shaft 95 at a predetermined position close to one end portion (left end portion in FIG. 3) of the pinion shaft 95. The pinion 36 is coaxially fixed to the pinion shaft 95 at a predetermined position close to the other end portion (right end portion in FIG. 3) of the pinion shaft 95. The select conversion mechanism 25 constitutes a speed reducer as a whole. Note that the second gear 81 is formed to be larger in diameter than both the first gear 56 and the pinion 36.

One end portion (left end portion in FIG. 3) of the pinion shaft 95 is supported by a rolling bearing 96 fixed to the housing 22. An inner ring of the rolling bearing 96 is fixedly fitted onto one end portion (left end portion in FIG. 3) of the pinion shaft 95. In addition, the outer ring of the rolling bearing 96 is fixed in a cylindrical recess 97 formed on the inner surface of the lid 27. In addition, the other end portion (right end portion in FIG. 3) of the pinion shaft 95 is supported by a rolling bearing 84. The pinion 36 and the rack 122 are in mesh with each other through rack-and-pinion. With this configuration, as the pinion shaft 95 rotates in accordance with the rotation of the transmission shaft 41, the shift select shaft 15 moves in the axial directions M11, M12 accordingly.

A first rotation angle sensor 87 is arranged at the other end portion of the pinion shaft 95. The first rotation angle sensor 87 is used to detect the rotation angle of the pinion shaft 95. A sensor hole 85 is formed in the bottom wall (the wall on the opposite side of the housing 22 from the lid 27; right wall in FIG. 3) of the housing 22, and passes through the bottom wall from the inner face to the outer face. The first rotation angle sensor 87 includes a sensor portion (not shown) and a first sensor shaft 99 that is coupled to the sensor portion. The distal end portion of the first sensor shaft 99 is coupled to a distal end portion (right end portion in FIG. 3) 82 of the pinion shaft 95 through the sensor hole 85 so as to be rotatable together with the pinion shaft 95. The first rotation angle sensor 87 calculates the rotation angle of the pinion shaft 95 on the basis of the rotation angle of the first sensor shaft 99 that rotates in accordance with the rotation of the pinion shaft 95. It is possible to obtain the axial position of the shift select shaft 15 based on the detection result output from the first rotation angle sensor 87. The detection result from the first rotation angle sensor 87 is input into an electronic control unit (ECU) 88 (described below).

In addition, a second rotation angle sensor 89 for detecting the rotation angle of the shift select shaft 15 is provided in the housing 22. The second rotation angle sensor 89 includes a body 90, a second sensor shaft 94 and a sector gear 91. A sensor portion (not shown) is incorporated in the body 90. The second sensor shaft 94 is coupled to the sensor portion. The sector gear 91 is fixedly fitted onto the second sensor shaft 94. The sector gear 91 is in mesh with a sensor gear 92 that is provided so as to be rotatable together with (fixedly fitted onto) the shift select shaft 15. The second rotation angle sensor 89 calculates the rotation angle of the shift select shaft 15 on the basis of the rotation angle of the second sensor shaft 94 that rotates in accordance with the rotation of the shift select shaft 15. A detection result output from the second rotation angle sensor 89 is input into the ECU 88 (described below).

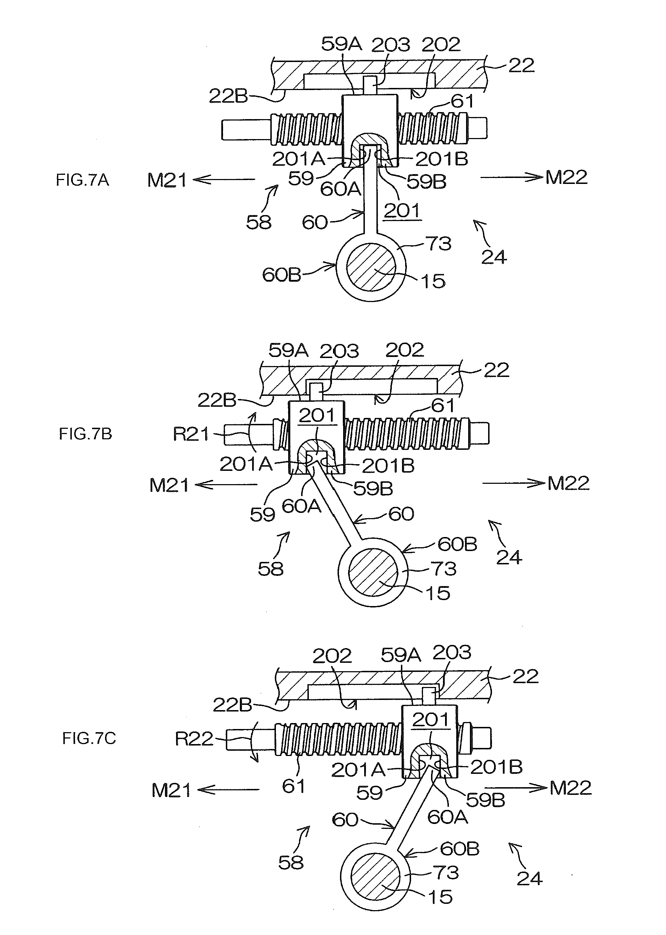

The ECU 88 executes drive control over the electric motor 23 via an electric motor driver (not shown). In addition, the ECU 88 executes drive control over the shift electromagnetic clutch 43 and the select electromagnetic clutch 45 via a relay circuit (not shown). Note that the ECU 88 may be accommodated in the gear housing 7. FIG. 7A to FIG. 7C are views that show changes in the state of the shift conversion mechanism 24 during a shift operation.

In the present embodiment, in the state shown in FIG. 7A, when the electric motor 23 is rotated in the rotation direction R11 (see FIG. 3) and the shift electromagnetic clutch 43 is engaged, the screw shaft 61 rotates in the rotation direction R21 (see FIG. 3) about its axis (around its central axis 80). The rotation of the nut 59 around the screw shaft 61 is prohibited over the entire range in the axial directions M21, M22 of the screw shaft 61. Therefore, as shown in FIG. 7B, the nut 59 moves in the axial direction M21 of the screw shaft 61.

In addition, as will be described later, regardless of where on the shift select shaft 15 the arm 60 is located, the engagement between the distal end portion 60A of the arm 60 and the nut 59 is maintained. Therefore, in accordance with the movement of the nut 59 in the axial direction M21, the arm 60 pivots within a plane that is perpendicular to the shift select shaft 15 (such that the distal end portion 60A moves in the axial direction M21). With the pivot motion of the arm 60, the shift select shaft 15 is rotated in the first rotation direction R1. In accordance with the rotation of the shift select shaft 15, the internal lever 16 rotates about the shift select shaft 15. As a result, one of the fork shafts 10A, 10B, 10C (see FIG. 1), coupled to the internal lever 16, axially moves in a corresponding one of the axial directions M2, M4, M6 (see FIG. 1). In this way, a shift operation is performed.

On the other hand, in the state shown in FIG. 7A, when the electric motor 23 is rotated in the rotation direction R12 (see FIG. 3) and the shift electromagnetic clutch 43 is engaged, the screw shaft 61 rotates in the rotation direction R22 (see FIG. 3) about its axis. The rotation of the nut 59 around the screw shaft 61 is prohibited over the entire range in the axial directions M21, M22 of the screw shaft 61. Therefore, as shown in FIG. 7C, the nut 59 moves in the axial direction M22 of the screw shaft 61. In addition, regardless of where on the shift select shaft 15 the arm 60 is located, the engagement between the distal end portion 60A of the arm 60 and the nut 59 is maintained. Therefore, in accordance with the movement of the nut 59 in the axial direction M22, the arm 60 pivots within a plane that is perpendicular to the shift select shaft 15 (such that the distal end portion 60A moves in the axial direction M22). In accordance with the pivot motion of the arm 60, the shift select shaft 15 is rotated in the second rotation direction R2. In accordance with the rotation of the shift select shaft 15, the internal lever 16 rotates about the shift select shaft 15. As a result, one of the fork shafts 10A, 10B, 10C, coupled to the internal lever 16, axially moves in a corresponding one of the axial directions M1, M3, M5 (see FIG. 1. In this way, a shift operation is performed. In this way, it is possible to appropriately cause the shift select shaft 15 to perform a shift operation.

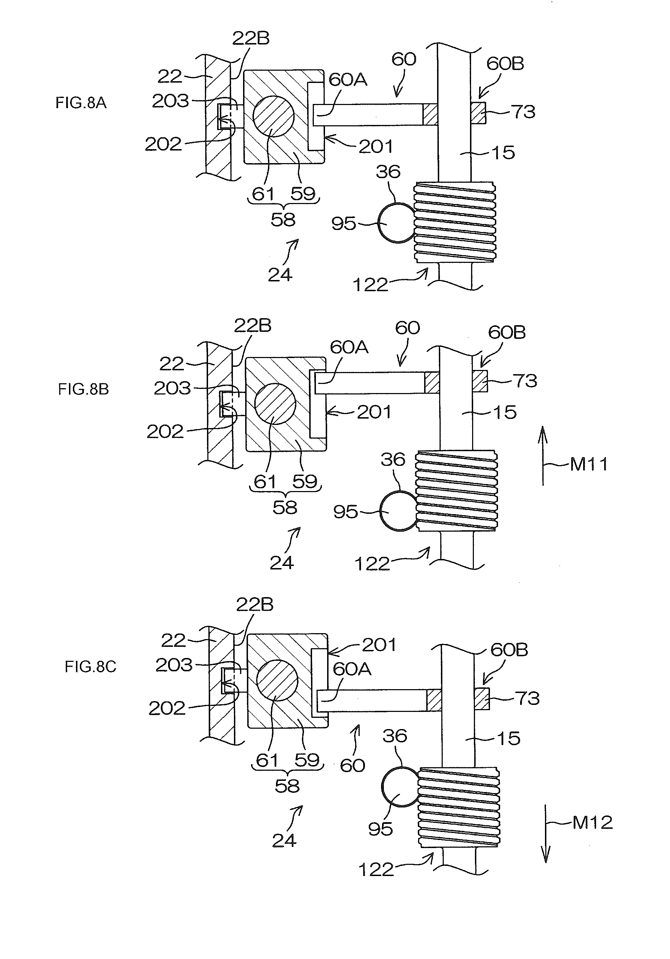

FIG. 8A to FIG. 8C are views that show changes in the state of the shift conversion mechanism 24 during a select operation. In the present embodiment, in the state shown in FIG. 8A, when the electric motor 23 is rotated in the rotation direction R11 (see FIG. 3) and the select electromagnetic clutch 45 is engaged, the pinion shaft 95 rotates in a rotation direction R31 (see FIG. 3) about its axis. Then, due to the engagement between the pinion 36 and the rack 122, the shift select shaft 15 moves in the first axial direction M11. In accordance with the movement of the shift select shaft 15 in the axial direction M11, the internal lever 16 (see FIG. 1) moves in the first axial direction M11. In this way, a select operation for selecting one of the fork shafts 10B, 10C (see FIG. 1), which is engaged with the internal lever 16, is performed.

The base end portion 60B of the arm 60 is fixed to the outer periphery of the shift select shaft 15. Therefore, in accordance with the movement of the shift select shaft 15 in the axial direction M11, the arm 60 moves in the first axial direction M11 while the arm 60 remains perpendicular to the shift select shaft 15. Because the distal end portion 60A of the arm 60 is fitted in the first guide groove 201 that extends along the first and second axial directions M11, M12, there is no possibility that the arm 60 that moves in the first axial direction M11 will contact part of the nut 59. In addition, regardless of the position of the arm 60 in the first and second axial directions M11, M12 of the shift select shaft 15, the distal end portion 60A of the arm 60 is engaged with the longitudinal inner walls 201A, 201B that define the first guide groove 201. That is, the engagement between the distal end portion 60A of the arm 60 and the nut 59 is maintained.

On the other hand, in the state shown in FIG. 8A, when the electric motor 23 is rotated in the rotation direction R12 (see FIG. 3) and the select electromagnetic clutch 45 is engaged, the pinion shaft 95 rotates in a rotation direction R32 (see FIG. 3) about its axis. Then, due to the engagement between the pinion 36 and the rack 122, the shift select shaft 15 moves in the axial direction M12. In accordance with the movement of the shift select shaft 15 in the axial direction M12, the internal lever 16 (see FIG. 1) moves in the second axial direction M12. In this way, a select operation for selecting one of the fork shafts 10A, 10B (see FIG. 1), which is engaged with the internal lever 16, is performed.

The base end portion 60B of the arm 60 is fixed to the outer periphery of the shift select shaft 15. Therefore, in accordance with the movement of the shift select shaft 15 in the axial direction M12, the arm 60 moves in the second axial direction M12 while the arm 60 remains perpendicular to the shift select shaft 15. The distal end portion 60A of the arm 60 is fitted in the first guide groove 201 that extends along the first and second axial directions M11, M12. Therefore, there is not possibility that the arm 60 that moves in the second axial direction M12 will contact part of the nut 59. In addition, regardless of the position of the arm 60 in the first and second axial directions M11, M12 of the shift select shaft 15, the distal end portion 60A of the arm 60 is engaged with the longitudinal inner walls 201 A, 201B that define the first guide groove 201. That is, the engagement between the distal end portion 60A of the arm 60 and the nut 59 is maintained. In this way, it is possible to appropriately cause the shift select shaft 15 to perform a select operation.

As described above, according to the embodiment, the base end portion 60B of the arm 60 is fixedly connected to the shift select shaft 15. Therefore, when the shift select shaft 15 is moved in the first and second axial directions M11, M12, the shift select shaft 15 does not scrape out the arm 60. Thus, it is possible to smoothly move the shift select shaft 15 in the axial directions M11, M12. In this way, it is possible to appropriately cause the shift select shaft 15 to perform a select operation.

With the electric actuator 21, it is possible to cause the shift select shaft 15 to smoothly perform a shift operation and a select operation. The embodiment of the invention has been described above. However, the invention may be implemented in various other embodiments. In the above description, the first guide groove 201 is formed in the bottom face 59B of the nut 59 of the ball screw mechanism 58. Alternatively, the first guide groove 201 may be formed by, for example, a rail that is provided so as to be movable together with the bottom face 59B of the nut 59.

In the above description, the second guide groove 202 is formed in the housing inner wall surface 22B and the fitting protrusion 203 is formed on the nut 59. Alternatively, the second guide groove 202 may be formed in the one face 59A of the nut 59 and the fitting protrusion 203 may be formed on the housing inner wall surface 22B. In addition, the second guide groove 202 may be formed of a rail fixedly provided on the housing inner wall surface 22B, a rail provided so as to be movable together with the one face 59A of the nut 59, or the like, and the first guide groove 201 may be formed of a rail provided so as to be movable together with the nut 59, or the like.

The cylindrical plain bearing 207 or the set of the plate-like plain bearings 205, 206 may be removed, or the cylindrical plain bearing 207 and the set of the plate-like plain bearings 205, 206 may be removed. In addition, the base end portion 60B of the arm 60 may be fixed to the outer periphery of the shift select shaft 15 by means of, for example, screwing or adhesion instead of fitting (press-fitting). Other than the above, various design changes may be made within the scope of the matter recited in the claims.

## Claims

1. An electric actuator that rotates a shift select shaft about an axis of the shift select shaft to perform a shift operation, and that moves the shift select shaft in an axial direction of the shift select shaft to perform a select operation, comprising:
an electric motor that generates rotational driving force; and
a shift conversion mechanism that converts the rotational driving force from the electric motor into force that rotates the shift select shaft about the axis, wherein
the shift conversion mechanism includes:
a ball screw mechanism that has a screw shaft that is arranged so as to be neither parallel to nor intersecting with the shift select shaft such that the screw shaft and the shift select shaft form a predetermined angle when viewed from a direction that is perpendicular to both an axial direction of the screw shaft and the axial direction of the shift select shaft, the screw shaft rotating upon receiving the rotational driving force from the electric motor, and a nut that has a first guide groove that extends along the axial direction of the shift select shaft, the nut being fitted to the screw shaft; and
an arm that has one end accommodated in the first guide groove so as to be movable in a longitudinal direction of the first guide groove, the one end being engaged with longitudinal inner walls of the first guide groove, and the other end fixed to an outer periphery of the shift select shaft, the arm pivoting about the shift select shaft in accordance with movement of the nut in the axial direction of the screw shaft to rotate the shift select shaft,
the electric actuator further comprising:
rotation prevention means for preventing rotation of the nut around the screw shaft, at a plurality of positions in the axial direction of the screw shaft.

2. The electric actuator according to claim 1, further comprising:
a housing that accommodates the electric motor and the shift conversion mechanism, wherein
the housing has a facing surface that faces the screw shaft, and
the rotation prevention means has a second guide groove that is formed in one of the nut and the facing surface and that extends in the axial direction of the screw shaft, and a fitting protrusion that is formed on the other one of the nut and the facing surface and that is fitted in the second guide groove.

3. The electric actuator according to claim 2, wherein a plain bearing is interposed between an inner wall that define the second guide groove and an outer periphery of the fitting protrusion.

4. The electric actuator according to any one of claims 1 to 3, wherein an annular portion that surrounds the outer periphery of the shift select shaft is provided at the other end of the arm, and the other end of the arm is fixed to the outer periphery of the shift select shaft by press-fitting the shift select shaft into the annular portion.
